# EUROPÄISCHE PATENTSCHRIFT

(11) **EP 2 347 432 B1**
(45) Veröffentlichungstag und Bekanntmachung des Hinweises auf die Patenterteilung: **17.07.2013**
(21) Anmeldenummer: 09751836.9
(22) Anmeldetag: 16.10.2009
(51) Int. Cl.: F21K 99/00

(54) **DIEBSTAHLSICHERE ELEKTRISCHE LAMPE SOWIE HIERMIT AUSGERÜSTETE LEUCHTE**
THEFT-PROOF ELECTRIC LAMP AND LUMINAIRE WHICH IS EQUIPPED WITH A LAMP OF THIS TYPE
LAMPE ÉLECTRIQUE ANTIVOL ET ÉCLAIRAGE MUNI D'UNE TELLE LAMPE

(30) Priorität: 13.11.2008 DE 202008015047 U
(43) Veröffentlichungstag der Anmeldung: 27.07.2011
(73) Patentinhaber: claviLUX UG (haftungsbeschränkt), 12161 Berlin (DE)
(72) Erfinder: Krips, David, 12169 Berlin (DE)
(74) Vertreter: Müller Schupfner & Partner
(86) Internationale Anmeldenummer: PCT/EP2009/063574
(87) Internationale Veröffentlichungsnummer: WO 2010/054913

(56) Entgegenhaltungen:
- WO-A-97/28582
- WO-A-2004/057639
- US-A- 4 280 169
- US-A- 4 623 823
- US-A- 5 044 974
- US-A- 5 788 525

## Beschreibung

### TECHNISCHES GEBIET

Die vorliegende Erfindung betrifft eine elektrische Lampe, wie sie insbesondere eine LED- oder eine OLED-Lampe darstellt, zum Einsetzen in eine Leuchtenfassung sowie eine Leuchte, welche mit einer entsprechenden Lampe ausgerüstet ist.

### STAND DER TECHNIK

Es ist zunehmend zu beobachten, dass an öffentlich zugänglichen Stellen Lampen - oft auch als Leuchtmittel bezeichnet - aus den Leuchten, in denen sie eingesetzt sind, entwendet werden. Dies ist insbesondere in solchen Fällen zu beobachten, in denen die Lampen relativ teuer sind und sich ein Diebstahl besonders gut "lohnt".

Diesem Problem versucht die in der WO 2004/057639 A1 beschriebene Lampe dadurch zu begegnen, dass sie zweiteilig aufgebaut ist. Einerseits ist der in die Leuchtenfassung einzuschraubende Lampensockel vorgesehen, und andererseits ist der Lichtemissionskörper in Form einer Energiesparlampe axial drehbar gegenüber dem Lampensockel angeordnet. Eine Absperrvorrichtung in Form einer in den Lampensockel einschraubbaren Schraube dient dazu, den Lichtemissionskörper wahlweise axial gegenüber dem Lampensockel verdrehbar zu machen, oder diese beiden Teile drehfest relativ zueinander zu verriegeln. Wenn die radial ausgerichtete Schraube ganz in ihr Gewinde im Lampensockel eingeschraubt ist, besteht keine drehfeste Verbindung zwischen dem Lampensockel und dem Lichtemissionskörper, und diese können sich frei gegeneinander axial verdrehen. Somit kann die Lampe durch ein sonst übliches Herausdrehen des Lichtemissionskörpers nicht aus der Leuchtenfassung herausgedreht werden. Dies stellt somit einen gewissen Diebstahlschutz dar. Wird dagegen die Schraube soweit aus dem Lampensockel herausgedreht, dass sie in eine entsprechende Aussparung in einem Gehäuse des Lichtemissionskörpers eingreift, besteht eine starre Verbindung zwischen diesen beiden Körpern. Dann kann die Lampe in herkömmlicher Weise aus der Leuchtenfassung herausgeschraubt werden.

Die aus der WO 2004/057639 A1 bekannte Lampe weist jedoch den Nachteil auf, dass ein potentieller Dieb, sobald er diesen Sicherungsmechanismus durchschaut hat und sich entsprechendes Werkzeug in Form eines geeigneten Schraubendrehers oder Inbusschlüssels für die Schraube beschafft hat, auch solche Lampen entwenden kann. Somit liegt der vorliegenden Erfindung die Aufgabe zugrunde, eine elektrische Lampe mit verbessertem Diebstahlschutz zum Einsetzen in eine Leuchtenfassung sowie eine Leuchte, die mit einer solchen Lampe ausgerüstet ist, zu schaffen.

### AUSFÜHRLICHE BESCHREIBUNG DER ERFINDUNG

Diese Aufgabe wird mit einer elektrischen Lampe gemäß Anspruch 1 bzw. einer Leuchte gemäß Anspruch 22 gelöst. Vorteilhafte Weiterbildungen der Erfindung sind Gegenstand der abhängigen Ansprüche.

Die erfindungsgemäße elektrische Lampe zum Einsetzen in eine Leuchtenfassung, wozu insbesondere LED- oder OLED-Lampen, aber auch Glühbirnen und Neonröhren zählen, weist einen Lampensockel sowie einen mit dem Lampensockel beweglich verbundenen Lichtemissionskörper auf. Ferner ist eine Absperrvorrichtung vorgesehen, die im Sperrzustand das Entnehmen der Lampe aus der Leuchtenfassung verhindert und im entsperrten Zustand das Entnehmen der Lampe aus der Leuchtenfassung ermöglicht. Die Erfindung zeichnet sich dadurch aus, dass die Absperrvorrichtung ein individualisiertes Schloss aufweist, durch das sie entsperrbar ist. Dabei ist es möglich, dass auch der Vorgang des Versperrens nur mit dem individualisierten Schloss möglich ist; es kann aber auch vorgesehen sein, dass das Versperren auch manuell erfolgen kann und nur für das Entsperren das individualisierte Schloss benutzt werden muss. In diesem Zusammenhang soll der Begriff "Versperren" bedeuten, dass zwei Gegenstände nicht nur gegeneinander verriegelt sind, sondern dass diese auch nur durch Einsatz individueller Mittel, wie beispielsweise eines individualisierten Schlosses, wie es beispielsweise ein Zylinderschloss, ein Bartschloss oder ein Zahlenschloss ist, wieder entriegelt werden kann. Dadurch, dass erfindungsgemäß ein individualisiertes Schloss für die Absperrvorrichtung vorgesehen ist, für das ein spezieller "Schlüssel" - in mechanischer und/oder elektronischer Form - verwendet werden muss, ist ein hoher Diebstahlschutz bei der erfindungsgemäßen elektrischen Lampe bzw. Leuchte möglich. Da erfindungsgemäß nur die Lampe ein individualisiertes Schloss aufweist und die entsprechende Leuchtenfassung unverändert bleibt, ist eine optimale Kompatibilität der erfindungsgemäßen Lampe mit den bereits vorhandenen Leuchtenfassungen gewährleistet. Somit können bestehende herkömmliche Lampen problemlos durch erfindungsgemäße Lampen ersetzt werden.

Es ist besonders bevorzugt, dass sich - im Sperrzustand der Absperrvorrichtung - der Lichtemissionskörper bezüglich des Lampensockels in einer sogenannten "Freilaufstellung" bzw. "Leerlaufstellung" befindet, wozu insbesondere die Leerlaufstellung in Bezug auf die gegenseitige Verdrehbarkeit gehört. So kann sich beispielsweise im Sperrzustand der Absperrvorrichtung der Lichtemissionskörper axial gegenüber dem Lampensockel drehen, wodurch ein unbefugtes Herausdrehen der Lampe aus der Leuchtenfassung unmöglich gemacht wird, da sich durch Drehen des Lichtemissionskörpers der Lampensockel nicht in Drehung versetzen und somit nicht aus der Lampenfassung herausdrehen lässt.

Bei einer Ausführungsform der Erfindung weist das individualisierte Schloss einen beweglichen, also verschiebbaren Riegel auf, der im entsperrten Zustand eine starre Verbindung zwischen dem Lampensockel und dem Lichtemissionskörper herstellt und im Sperrzustand die Verbindung zwischen diesen beiden Teilen unterbricht.

Eine vorteilhafte Variante der Erfindung besteht darin, dass das individualisierte Schloss einen Riegel aufweist, der elektromagnetisch bzw. elektromechanisch - beispielsweise mittels eines Elektromotors - bewegbar ist. Hierunter ist auch eine Variante zu verstehen, bei der zwei Flächen durch magnetische Kräfte relativ zueinander fixiert werden können, wodurch ein Leerlauf aktiviert bzw. deaktiviert werden kann. Eine dieser Flächen ist in diesem Beispiel durch einen Elektromagneten bewegbar bzw. steuerbar. Der für diese Steuerung erforderliche Strom kann durch ein externes Steuergerät geliefert werden.

Es kann vorteilhaft sein, wenn das Schloss eine Empfangseinheit für ein codiertes Funksignal aufweist, mittels dem es entsperrbar und gegebenenfalls versperrbar ist. Dies bringt den Vorteil, dass ein Benutzer die Lampe auch durch Fernbedienung in Form eines Funksignals versperren und entsperren kann und die Lampe dazu nicht mehr anfassen muss. Besonders bevorzugt ist es dabei, die Empfangseinheit als RFID-Chip auszubilden. Mithilfe eines solchen RFID-Chips ist es in besonders einfacher Weise möglich, sicherzustellen, dass die Absperrvorrichtung nur von einem autorisierten Benutzer entsperrt werden kann, indem das Funksignal für die Betätigung des RFID-Chips so ausgestaltet wird, dass es einen bestimmten Code enthält, über den nur ein berechtigter Benutzer mit einem entsprechenden Sendegerät verfügen kann.

Es ist einerseits möglich, die Empfangseinheit der Lampe mit Strom aus der Stromversorgung der Lampe zu versorgen. Andererseits ist es auch möglich und bevorzugt, den für die Betätigung des Schlosses benötigten Strom elektromagnetisch zu induzieren und hierfür eine entsprechende Empfangseinheit, beispielsweise in Form einer Induktionsspule, vorzusehen.

Als Alternative ist es auch möglich, am oder im Schloss eine Anschlussvorrichtung vorzusehen, an die eine Steuereinheit zum Versperren und Entsperren des Schlosses angeschlossen werden kann, beispielsweise mit Kabeln und einem entsprechenden Stecker. Eine solche Steuereinheit kann beispielsweise ebenfalls einen Code für das gesicherte Versperren und Entsperren des Schlosses verwenden.

Eine weitere Alternative besteht darin, einen Schalter vorzusehen, der mit dem Schloss verbunden ist, und mit dem das Schloss versperrt und entsperrt werden kann.

Gemäß einer Ausführungsform der Erfindung ist es möglich, dass das individualisierte Schloss einen elektrischen Motor oder aber einen Magnetschalter zum Betätigen des Schlosses aufweist. Dies bietet den Vorteil, dass ein Benutzer keinen direkten mechanischen Zugriff auf das Schloss benötigt.

Um einer nicht-autorisierten Manipulation der erfindungsgemäßen Lampe noch besser vorbeugen zu können, kann es von Vorteil sein, wenn das individualisierte Schloss eine Codierung aufweist, die nur im entsperrten Zustand geändert werden kann. Dies bedeutet, dass nur autorisierte Personen, welche das Schloss ohnehin in den entsperrten Zustand bringen können, die entsprechende Codierung auch ändern können, jedoch nicht-autorisierte Personen im entsperrten Zustand keine Versuche unternehmen können, die Codierung entsprechend zu ändern, um doch noch in den entsperrten Zustand gelangen zu können.

Eine Variante der Erfindung besteht darin, dass das individualisierte Schloss einen Verstellmechanismus mit einer Eingriffsöffnung zu dessen Betätigung aufweist, deren Form veränderbar ist. Hier kann beispielsweise eine Kreuzschlitzschraube so abgeändert werden, dass die Länge der jeweiligen Schlitze sowie der Winkel, unter dem diese beiden zueinander ausgestellt sind, verändert werden können. In diesem Beispiel wäre die Form in zwei Parametern veränderbar. Entsprechend wäre dann jeder Formänderungsparameter durch eine am Lampensockel angebrachte Anzeigeanordnung codiert, die auch für einen Benutzer sichtbar ist. Nur durch ein entsprechendes Werkzeug mit komplementärer Anzeigeordnung bzw. Codierung kann ein derartiges individualisiertes Schloss vom Sperrzustand in den entsperrten Zustand gebracht werden.

Gemäß einer weiteren Ausführungsform der Erfindung weist die Absperrvorrichtung einen Rastmechanismus auf, der während des Ausdrehens des Lampensockels aus der Leuchtenfassung aus dem entsperrten Zustand in den Sperrzustand übergeht und im Sperrzustand verbleibt. Dieser Übergang folgt jedoch nur bei Überschreitung eines vorgegebenen Drehmoments, so dass beispielsweise ein nicht vollständig eingedrehter Lampensockel wieder herausgedreht werden kann, während ein Versuch, einen fest eingedrehten Lampensockel, für dessen Ausdrehen eine hohes Drehmoment aufgebracht werden muss, zum automatischen Übergang in den Sperrzustand führt. Vorzugsweise weist dabei der Rastmechanismus einen Rastnasenkranz auf, der drehfest mit dem Lampensockel verbunden ist, einen Rasthaken, der im entsperrten Zustand in den Rastnasenkranz eingreift und drehfest mit dem Lichtemissionskörper verbunden ist, sowie eine Druckfeder, die den Rasthaken in Richtung auf einen Eingriff mit dem Rastnasenkranz beaufschlagt. Außerdem ist eine Rastvorrichtung vorgesehen, welche einen Übergang des Rasthakens von einer Stellung in Eingriff mit dem Rastnasenkranz in eine Stellung außer Eingriff mit dem Rastnasenkranz zulässt und die den in Eingriff mit dem Rastnasenkranz befindlichen Rasthaken in dieser Stellung hält. Ein Übergang aus diesem Sperrzustand ist bei dieser Ausführung nur durch Verwendung eines geeigneten mechanischen Schlüssels möglich. Alternativ kann auch die Entsperrung durch einen codierten Elektromagneten erfolgen.

Gemäß einer weiteren Ausführungsform der Erfindung weist die Absperrvorrichtung mechanische Sperrelemente oder eine Vorrichtung zur Änderung der Form des Lampensockels auf, womit ein verriegelndes bzw. einrastendes Zusammenwirken mit der Leuchtenfassung erzielt werden kann. Ein derartiges Verrasten bzw. Verriegeln kann dabei durch direktes Angreifen an der Leuchtenfassung erreicht werden, ohne eine Änderung an der Installation, insbesondere an der Leuchtenfassung, vornehmen zu müssen.

Bei einer alternativen, vorteilhaften Ausführungsform weist der Lampensockel mindestens einen üblichen Bajonettanschlussstift zum Einsetzen in eine entsprechende in der Leuchtenfassung vorgesehene Bajonettöffnung auf, welche einen Einführungsabschnitt mit einer ersten lichten Weite sowie einen Verriegelungsabschnitt mit einer zweiten lichten Weite, die kleiner als die erste lichte Weite ist, umfasst. Erfindungsgemäß weist die Absperrvorrichtung mindestens einen Sperrstift auf, der in der Verriegelungsstellung des Bajonettanschlussstifts, in welcher sich der Bajonettanschlussstift in dem Verriegelungsabschnitt befindet, in den Einführungsabschnitt gebracht und dort arretiert werden kann. Der Sperrstift ist dabei vorzugsweise durch einen nach Eindrücken automatisch einrastenden und nur durch einen Schlüssel wieder lösbaren bzw. entsperrbaren, mit dem Sperrstift verbundenen Rastmechanismus betätigbar.

Als weitere Verbesserung der Diebstahlsicherheit kann ein Warnmechanismus vorgesehen werden, der ein Warnsignal abgibt, falls der in die Leuchtenfassung eingesetzte Lampensockel unbefugt - also ohne autorisierten Zugang zum Versperrmechanismus bzw. ohne korrektes Entsperren des Versperrmechanismus - entfernt werden soll. Besonders bevorzugt dabei ist, dass das Warnsignal akustische und zusätzlich oder alternativ visuelle Signale umfasst. Hierbei ist insbesondere an eine Variation der Beleuchtungsintensität des Lichtemissionskörpers, was zu einem Flackern oder Blinken führt, gedacht. Realisiert werden kann derartiges Flackern beispielsweise durch entsprechende Schleifkontakte mit lückenhaften Abnehmern. Alternativ kann die unautorisierte Drehbewegung über Zahnräder, wie beispielsweise ein Hohlrad und ein innenliegendes Planetenrad, registriert werden und das resultierende Signal über einen Potentiometer und eine weitere elektronische Verarbeitung dazu verwendet werden, ein entsprechendes Lichtsignal abzugeben. Hierzu kann auch das Aufleuchten eines zusätzlichen Signalleuchtmittels, wie beispielsweise eine rote Lampe, gehören.

Der Warnmechanismus kann auch einen elektrischen Kondensator enthalten, der sich bei unbefugter Berührung der Lampe entlädt und der einer Person, welche die Lampe berührt, einen kleinen Stromstoß versetzt. Dadurch kann die Abschreckungswirkung vor einem unbefugten Eingriff auf die erfindungsgemäße Lampe erhöht werden.

Vorstehend wurden die verschiedenen Warnmechanismen als zusätzliche Sicherungsmaßnahme gegen Diebstahl in Verbindung mit einer Absperrvorrichtung beschrieben. Es ist jedoch festzuhalten, dass erfindungsgemäß derartige Warnmechanismen auch ohne Vorhandensein einer Absperrvorrichtung vorgesehen werden können. Eine dementsprechende erfindungsgemäße elektrische Lampe weist somit zwar einen Lampensockel, einen damit verbundenen Lichtemissionskörper und einen Warnmechanismus auf, jedoch keine Absperrvorrichtung.

Das der Erfindung zugrunde liegende Problem kann außerdem durch eine Leuchte gemäß Anspruch 22 gelöst werden, wobei diese Leuchte eine der vorstehend erläuterten Lampen enthält, die in eine Leuchtenfassung eingesetzt ist.

### KURZE BESCHREIBUNG DER ZEICHNUNGEN

Weitere Vorteile, Merkmale und Besonderheiten der Erfindung ergeben sich aus der nachfolgenden Beschreibung von vorteilhaften, jedoch nicht beschränkenden Ausführungsformen der Erfindung anhand der schematischen und nicht maßstabsgetreuen Zeichnungen. Es zeigen:
- **Fig. 1**: eine erste Ausführungsform der erfindungsgemäßen Lampe in perspektivischer Darstellung;
- **Fig. 2**: die erste Ausführungsform in Schnittdarstellung;
- **Fig. 3**: die erste Ausführungsform in Explosionsdarstellung;
- **Fig. 4**: eine zweite Ausführungsform der erfindungsgemäßen Lampe in teilperspektivischer Darstellung;
- **Fig. 5**: eine dritte Ausführungsform der erfindungsgemäßen Lampe in perspektivischer Darstellung;
- **Fig. 6**: eine vierte Ausführungsform der erfindungsgemäßen Lampe in Seitenansicht;
- **Fig. 7**: eine fünfte Ausführungsform der erfindungsgemäßen Lampe in Seitenansicht;
- **Fig. 8**: eine sechste Ausführungsform der erfindungsgemäßen Lampe in Seitenansicht; und
- **Fig. 9a** - **9e**: eine siebte Ausführungsform der erfindungsgemäßen Lampe inSeitenansicht bzw. Querschnittsansichten;
- **Fig. 10a** -**10j**: eine achte Ausführungsform der erfindungsgemäßen Lampe in einer Ansicht von unten, Seitenansichten bzw. Querschnittsansichten.

### AUSFÜHRLICHE BESCHREIBUNG VORTEILHAFTER AUSFÜHRUNGSFORMEN

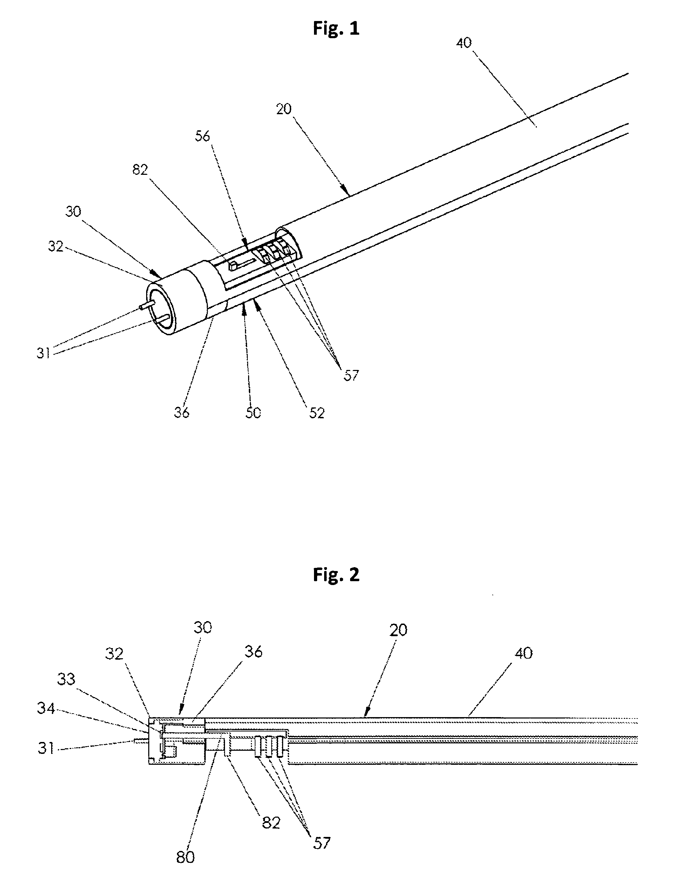

In **Fig. 1** ist eine Röhrenlampe 20 mit T8-Sockel gemäß einer ersten Ausführungsform der Erfindung dargestellt. Diese Ausführungsform ist selbstverständlich auch bei anderen Sockeln wie T5 oder anderen Typen von Röhrenfassungen einsetzbar. Derartige Lampen 20 können z.B. sowohl Leuchtstoffröhren als auch LED-Lampen oder OLED-Lampen sein. Eine derartige Lampe 20 umfasst an jedem ihrer axialen Enden einen Lampensockel 30 mit zwei Anschlussstiften 31 sowie einen mit dem Lampensockel 30 verbundenen Lichtemissionskörper 40. Derartige Röhrenlampen werden in der Regel durch Einsetzen der Anschlussstifte 31 in eine entsprechende Leuchtenfassung eingesetzt und durch Drehen um beispielsweise 90° in dieser Leuchtenfassung verriegelt. Zum Entnehmen dieser Lampe 20 wird der umgekehrte Vorgang ausgeführt.

Erfindungsgemäß ist diese erste Ausführungsform mit einem Zahlenschloss 56 als Absperrvorrichtung 50 versehen, mit welcher die Lampe 20 gegen unberechtigte Entnahme aus der Leuchtenfassung gesichert werden kann. Das Zahlenschloss 56 weist drei Zahleneinstellräder 57 auf, welche von einem beweglichen Riegel 80 (vergleiche hierzu insbesondere die Schnittdarstellung von **Fig. 2****)** durchsetzt sind. Bei entsprechender Einstellung der Zahleneinstellräder 57 kann der Riegel 80 aus einem entsperrten Zustand, der hier dargestellt ist und in dem sich der Riegel 80 links befindet, über einen am Riegel 80 befestigten Betätigungsvorsprung 82 nach rechts bewegt und dadurch in einen Sperrzustand bewegt werden. Hierbei durchsetzt der Riegel 80 die Zahleneinstellräder 57 und greift nicht mehr in eine von mehreren radialen Aussparungen 33 in einem Stromabnehmerzylinder 34 ein. Dadurch kann der Lichtemissionskörper 40 bezüglich des Lampensockels 30 frei gedreht und nicht mehr aus der Leuchtenfassung entfernt werden. Greift dagegen der Riegel 80 in eine der Aussparungen 33 im Stromabnehmerzylinder 34 ein, ist der Leerlauf bzw. Freilauf gesperrt, und die Lampe 20 kann aus der Leuchtenfassung entnommen bzw. herausgedreht werden.

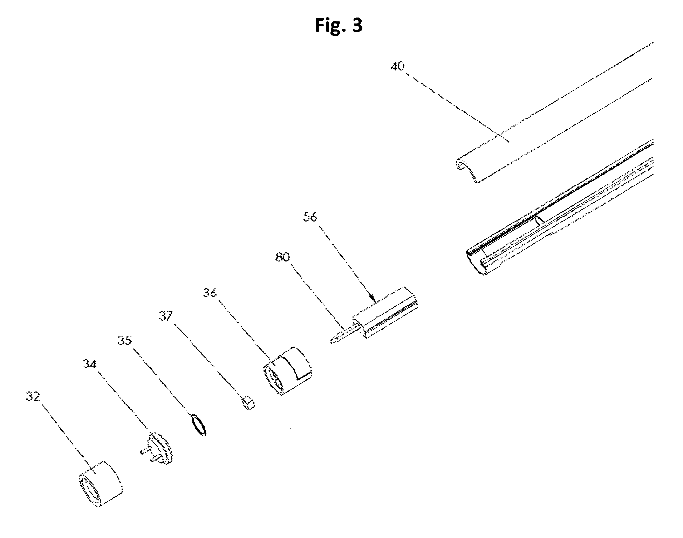

Wie insbesondere aus der Explosionszeichnung von **Fig. 3** ersichtlich ist, ist ein Zwischenstück 36 vorgesehen, welches der Arretierung des Riegels 80 in der Aussparung 33 und zur Aufnahme eines Schleifkontaktes 37 dient. Am Stromabnehmerzylinder 34 ist rückseitig ein elektrisch leitender Ring 35 angebracht. Der Stromabnehmerzylinder 34 und der elektrisch leitende Ring 35 werden zwischen der aufzusteckenden Endkappe 32 und dem Zwischenstück 36 eingeklemmt, so dass sie noch drehbar bleiben, aber ein Kontakt zwischen dem Ring 35 und dem Schleifkontakt 37 hergestellt wird.

Zusätzlich zu der hier links gezeigten Absperrvorrichtung 50 kann eine solche auch auf der rechten Seite der Lampe 50 angebracht sein. Alternativ können beide Stromabnehmer 34 über eine Welle verbunden sein. Sperrt der Riegel 80 einseitig die Drehbarkeit, wird stets auch die Drehbarkeit der Stromabnehmer 34 an beiden Enden gesperrt. Als weitere Variante ist es möglich, einen Riegel 80 für den näher liegenden Stromabnehmerzylinder 34 und einen zweiten, hier nicht dargestellten, langen Riegel für den Stromabnehmerzylinder am anderen Ende vorzusehen. Auch dadurch wird erreicht, dass stets die Drehbarkeit beider Stromabnehmerzylinder gesperrt werden kann.

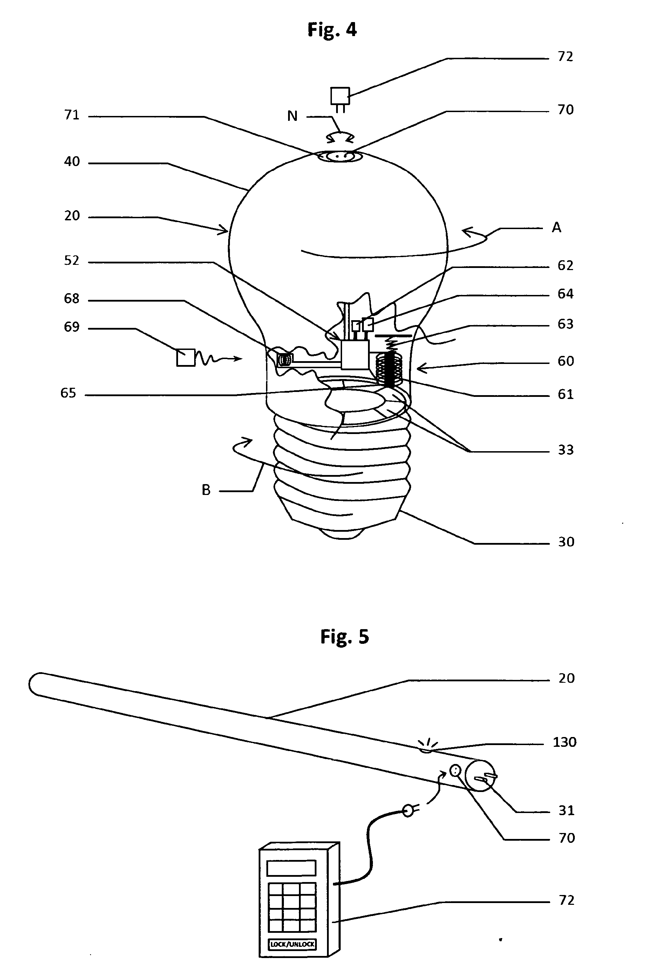

In **Fig. 4** ist eine zweite Ausführungsform der erfindungsgemäßen Lampe 20 dargestellt, welche einen E27-Sockel als Lampensockel 30 aufweist. Am oberen Ende des Lampensockels 30 sind mehrere Vertiefungen bzw. Aussparungen 33 vorgesehen. Der Lichtemissionskörper 40 - hier in Form einer birnenförmigen Kuppel - ist axial beweglich bzw. verdrehbar bezüglich des Lampensockels 30 angeordnet, was durch die beiden Pfeile A und B angedeutet ist. Im Inneren des Lichtemissionskörpers 40 ist eine Spule 61 befestigt. Oberhalb der Spule 61 ist eine Axialfeder 63 angeordnet, an welcher ein (ferromagnetischer) Bolzen 65 befestigt ist. Sobald die Spule 61 von einem Gleichstrom durchflossen wird, wirkt auf den Bolzen 65 aufgrund des Magnetfelds eine axiale Kraft, welche eine Bewegung des Bolzens 65 in axialer Richtung nach unten bewirkt. Der Bolzen 65 wird dabei soweit nach unten verschoben, dass er in eine der Aussparungen 33 eingreift. In dieser Stellung ist der Leerlauf bzw. Freilauf zwischen dem Lampensockel 30 und dem Lichtemissionskörper 40 blockiert. Somit kann die Lampe 20 aus ihrer Leuchtenfassung herausgedreht werden. Sobald kein Strom mehr in der Spule 61 fließt, bewirkt die Axialfeder 63 eine Rückstellung des Bolzens 65 in die Ausgangslage, in der sich dieses elektromagnetische Schloss 61 in einem gesperrten Zustand befindet. Somit kann die Lampe 20 nicht mehr aus der Leuchtenfassung entnommen werden.

Des Weiteren ist im Inneren des Lichtemissionskörpers 40 ein Chip z. B. mit einem RFID 64 angeordnet, der mit einer Elektronik 66 zur Überprüfung des Codes des RFID 64 und zur Programmierung der Entsperrungs- und Versperrungsvorgänge dient. In dem Lichtemissionskörper 40 ist ein axial verlaufender Anschlusskanal 71 vorgesehen, an dessen oberem Ende eine Anschlussvorrichtung 70 zum Anschluss einer Steuereinheit 72 mittels Anschlusskabeln und Steckern vorgesehen ist. Wie es durch einen Doppelpfeil N angedeutet ist, ist die Anschlussvorrichtung 70 vorzugsweise frei drehbar bzw. drehbar gelagert, damit ein Verdrehen der Anschlusskabel verhindert werden kann. Mit der Steuereinheit 72 kann nach Anschluss an der Anschlussvorrichtung 70 das Versperren und Entsperren des elektromagnetischen Schlosses 60 durchgeführt werden, indem über die Anschlusskabel einerseits der Code und andererseits der erforderliche Strom übertragen wird. Alternativ kann das Versperren und Entsperren auch durch ein von einer Sendeeinheit 69 abgegebenes Funksignal bewirkt werden, welches von einer Empfangseinheit 62 empfangen wird. Die Stromversorgung des elektromagnetischen Schlosses 60 erfolgt dabei in beiden vorgenannten Fällen über die anzuschließende Steuereinheit 72. Alternativ kann die Stromversorgung auch über die Induktion einer elektromagnetischen Spannung in einer in der Lichtemissionseinheit 40 angeordneten Spule 68 bewirkt werden. Außerdem kann die Stromversorgung für das elektromagnetische Schloss 60 auch direkt über die Stromversorgung der Lampe 20 erfolgen. Insbesondere bei LED-Leuchtmitteln kann der Strom dabei dem Gleichrichter entnommen werden.

Gemäß Darstellung in **Fig. 5** kann auch bei einer Lampe 20 mit T8-Sockel, T5-Sockel oder anderen Sockeltypen von Röhrenfassungen eine in Zusammenhang mit Fig. 4 beschriebene Anschlussvorrichtung 70 zum Anschließen einer Steuereinheit 72 vorgesehen sein, mit der das Versperren und Entsperren eines individualisierten Schlosses 52 (z.B. eines hier nicht dargestellten elektromagnetischen Schlosses 60) bewirkt werden kann. In **Fig. 5** ist des Weiteren ein Warnmechanismus 130 schematisch dargestellt, der in der Nähe der Anschlussstifte 31 angeordnet ist. Der Warnmechanismus 130 kann ein Warnsignal abgeben, falls die in die Leuchtenfassung eingesetzte Lampe 20 unbefugt entfernt werden soll, also von einem nicht-autorisierten Benutzer ohne korrektes Entsperren der Absperrvorrichtung entfernt werden soll. Es ist schematisch dargestellt, dass der Warnmechanismus visuelle Signale in Form eines Blinkens einer Signallampe abgibt. Alternativ oder zusätzlich können auch akustische Signale abgegeben werden.

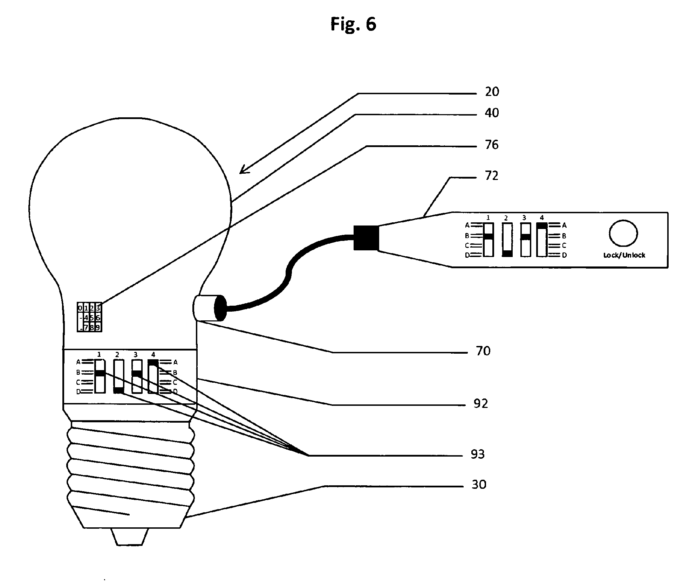

Gemäß **Fig. 6** kann eine Steuereinheit 72 auch seitlich an einem birnenförmigen Lichtemissionskörper 40 über eine Anschlussvorrichtung 70 angeschlossen werden. Wie in Fig. 6 ersichtlich, ist am Lampensockel 30 eine Anzeigeanordnung 92 für einen bei der Lampe 20 gerade eingestellten Code angebracht. Mittels mehrerer Mikroschalter 93 kann der Code dabei geändert werden. Es ist klar, dass ein Entsperren eines in der Lampe 20 vorgesehenen individualisierten Schlosses 52 (hier nicht dargestellt), welches mit dem eingestellten Code verknüpft ist, nur dann möglich ist, wenn der in der Steuereinheit 72 eingestellte Code mit dem an der Lampe eingestellten Code übereinstimmt. Als Variante könnte auch vorgesehen sein, dass an der Steuereinheit 72 ein komplementärer Code einzustellen ist, der nicht mit dem an der Lampe 20 eingestellten Code übereinstimmt. Alternativ zu dieser Möglichkeit des Versperrens und Entsperrens über die Steuereinheit 72 kann ein ständig sichtbares Codeeingabefeld 76 mit Tipptasten angebracht werden, mit dem durch beispielsweise Berühren bzw. Tastendruck ein Code zum Sperren und Entsperren eingegeben werden kann. Vorzugsweise ist bei dieser vierten Ausführungsform die Anzeigeanordnung 92 so angebracht, dass sie bei einer in eine Leuchtenfassung eingeschraubten Lampe nicht sichtbar und damit auch nicht für eine Änderung zugänglich ist. Mit einem Doppelpfeil O ist die freie Verdrehbarkeit des Lampensockels 30 gegenüber dem Lichtemissionselement 40 angedeutet.

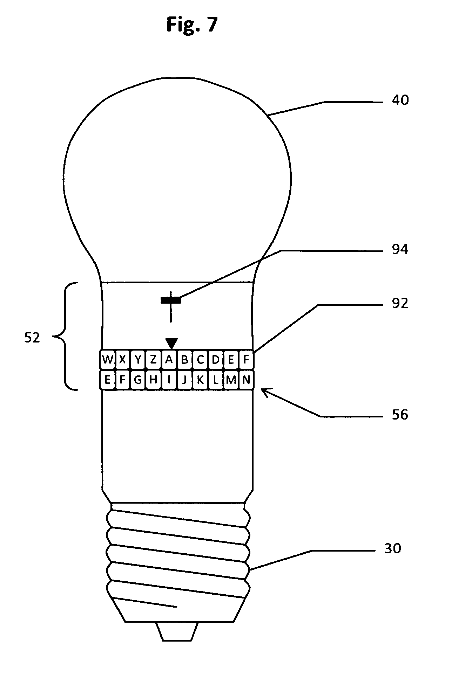

Abweichend von der in Fig. 6 dargestellten Ausführungsform ist bei der in **Fig. 7** dargestellten fünften Ausführungsform der Lampenhals so verlängert, dass ein im Hals integriertes Zahlenschloss 56 auch im versperrten Zustand bedienbar und zugänglich ist. Nur durch Einstellung des richtigen Codes kann dann der Leerlauf bzw. Freilauf über einen Dreh- oder Schiebeschalter 94 geöffnet werden. Der Vorteil bei dieser Ausführungsform besteht darin, dass das durch die Anzeigevorrichtung 92 mit dem Code und dem Schiebeschalter 94 gebildete individualisierte Schloss 52 ohne Werkzeug bedienbar ist.

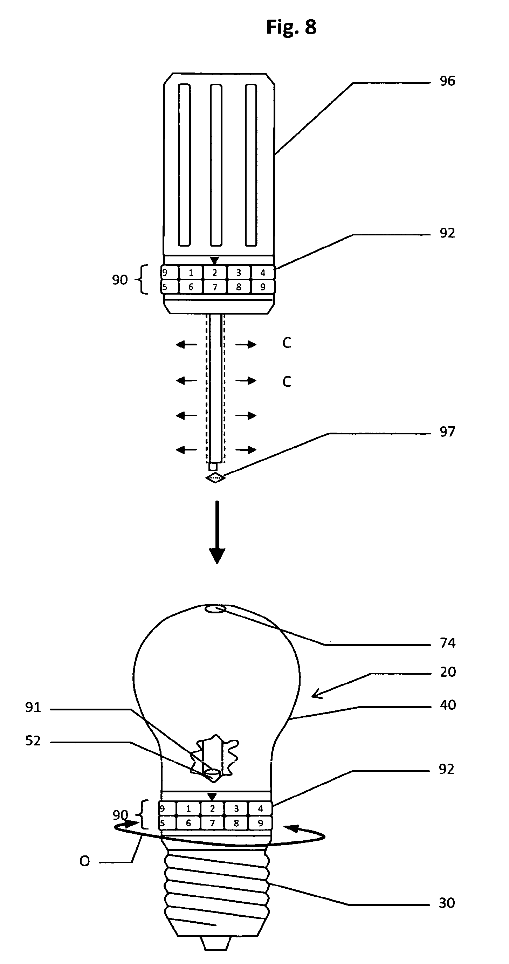

In **Fig. 8** ist eine sechste Ausführungsform der erfindungsgemäßen Lampe 20 gezeigt. In dieser Lampe 20 ist ein den Lichtemissionskörper 40 axial durchsetzender Zugangskanal 74 vorgesehen, an dessen unterem Ende ein schematisch dargestelltes individualisiertes Schloss 52 angebracht ist. Dieses individualisierte Schloss 52 kann mithilfe eines Verstellmechanismus 90, dessen Parameter an einer Anzeigeanordnung 92 angezeigt werden, eingestellt werden. Die Besonderheit bei dieser Ausführungsform besteht darin, dass das individualisierte Schloss eine Eingriffsöffnung 91 aufweist, deren Form mit mindestens einem Parameter, vorzugsweise mit zwei Parametern, veränderbar ist. Als Beispiel hierfür sei eine normale Kreuzschlitzschraube betrachtet. So kann beispielsweise als erster Parameter die Länge eines oder beider Schlitze variiert werden. Dies ist durch die mehreren Pfeile C bei dem zugehörigen Einstellwerkzeug 96 schematisch angedeutet. Als weiterer Parameter kann der Winkel, unter dem die beiden Schlitze relativ zueinander angeordnet sind - dieser Winkel ist bei einer normalen Kreuzschlitzschraube gewöhnlich 90° ohne Variationsmöglichkeit - abgewandelt werden, beispielsweise auf 80° und 100°. Diese Einstellung kann auch bei dem Einstellwerkzeug 96, das stark einem Schraubenzieher ähnelt, mittels des Verstellmechanismus 90 und der Anzeigeanordnung 92 vorgenommen werden, wobei die Einstellung des zweiten Parameters über eine Raute 97 am unteren Ende des Einstellwerkzeugs 96 schematisch dargestellt ist.

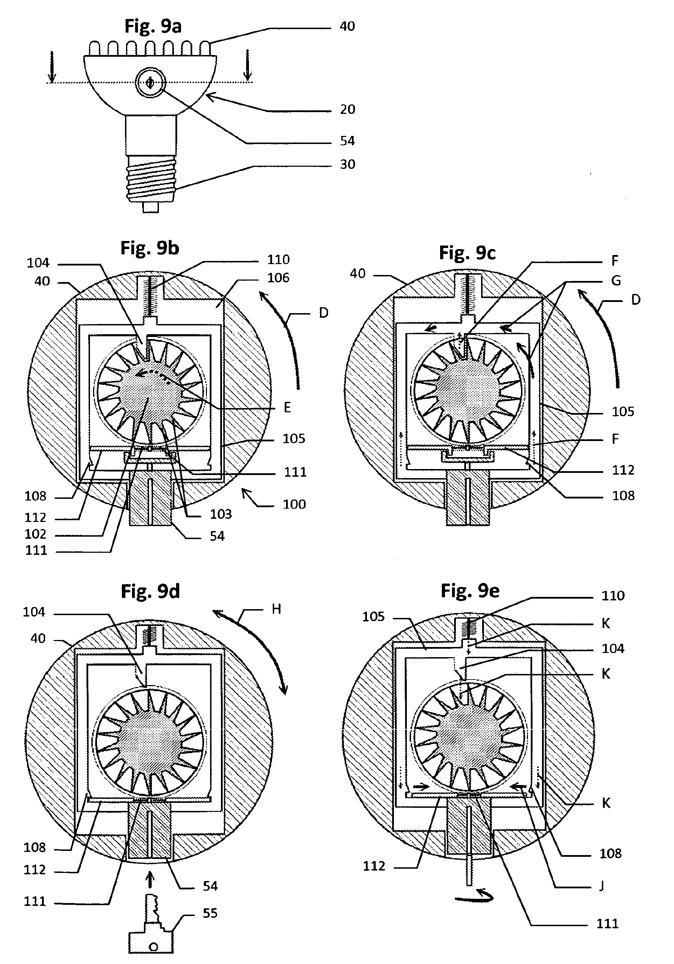

In den **Fig. 9a** - **9e** ist eine siebte Ausführungsform der erfindungsgemäßen Lampe 20 dargestellt. Fig. 9a zeigt eine Seitenansicht dieser Lampe 20, bei der ein Zylinderschloss 54 zum Entsperren des individualisierten Schlosses 52 vorgesehen ist, welches in den Fig. 9b - 9e näher beschrieben ist. Die Fig. 9b - 9e sind Querschnittsansichten durch die Fig. 9a an der angegebenen Stelle.

Die Absperrvorrichtung 50 umfasst einen Rastmechanismus 100, der wie folgt aufgebaut ist: Ein Rastnasenkranz 102, welcher eine Vielzahl von im Wesentlichen radial abstehenden Rastnasen 103 aufweist, ist drehfest mit dem Lampensockel 30 verbunden und befindet sich innerhalb des Lichtemissionskörpers 40. Mit dem Lichtemissionskörper 40, welcher axial verdrehbar gegenüber dem Lampensockel 30 und dem Rastnasenkranz 102 angeordnet ist, ist ein Halterahmen 105 verbunden, welcher sich in einer in dem Lichtemissionskörper 40 vorgesehenen Aussparung 106 hin- und herbewegen kann. Der Halterahmen 105 umgibt den Rastnasenkranz 102 und weist an seiner hier oben dargestellten Seite einen radial nach innen ragenden Rasthaken 104 auf. Durch eine am Lichtemissionskörper 40 angreifende Druckfeder 140 ist der Halterahmen 105 so beaufschlagt, dass der Rasthaken 104 zum Zentrum dieser Anordnung beaufschlagt ist, also in den Rastnasenkranz 102 eingreift.

Wenn in dieser Stellung gemäß Fig. 9b der Lichtemissionskörper 40 in Richtung des Pfeiles D oder auch in der entgegengesetzten Richtung gedreht wird, wird mit dem Lichtemissionskörper 40 über die Verrastung des Rasthakens 104 mit den Rastnasen 103 des Rastnasenkranzes 102 auch der Lampensockel 30 gedreht, wie es durch den Pfeil E im Rastnasenkranz 102 angedeutet ist. Somit kann die Lampe in eine Fassung hineingeschraubt oder aus ihr herausgeschraubt werden. Muss jedoch für diese Drehbewegung ein Drehmoment ausgeübt werden, welches oberhalb einer bestimmten Schwelle liegt, gleitet der Rasthaken 104 an der Rastnase 106, an welcher er anliegt, radial nach außen (hier in der Darstellung gemäß gestricheltem Pfeil F in Fig. 9c nach oben), und zwar gegen die Kraft der Druckfeder 110. Wird diese Drehbewegung in Richtung des Pfeils D weiter fortgesetzt, gelangen die beiden Rastvorsprünge 108, die sich im Bereich der Unterseite des Halterahmens 105 befinden, zunächst in Anlage an zwei Platten 112, die sich gemäß zeichnerischer Darstellung horizontal erstrecken und durch eine Druckfeder 111 auseinandergedrückt werden. Die Richtung der Bewegung des Halterahmens 105 ist dabei in Fig. 9c ebenfalls schematisch mit gestrichelten Pfeilen F bezeichnet. Genaugenommen müsste sich der Lichtemissionskörper 40 mit dem Halterahmen 105 gemäß den Pfeilen G in Fig. 9c - zumindest um einen kleinen Drehwinkel - drehen, der besseren Übersichtlichkeit halber wurde eine solche Drehung jedoch nicht dargestellt. Sobald die Rastvorsprünge 108 an den Platten 112 vorbeigegangen sind, drückt die Druckfeder 111 die beiden Platten 112 wieder nach außen, was zu einem Verrasten der Rastnasen 108 mit den Platten 112 führt. Im Zuge dieser Bewegung wurde der Halterahmen 105 mit dem Rasthaken 104 soweit bewegt, dass der Rasthaken 104 außer Eingriff mit dem Rastnasenkranz 102 gelangt ist. In dieser Stellung kann der Lichtemissionskörper 40 beliebig gedreht werden (in Fig. 9d angedeutet durch den Doppelpfeil H), ohne eine Kraft auf den Rastnasenkranz 102 und den drehfest mit ihm verbundenen Lampensockel 30 auszuüben.

Das heißt in anderen Worten, dass sich der Rastmechanismus 100 gemäß der siebten Ausführungsform im versperrten Zustand befindet und die Lampe 20 nicht aus der Leuchtenfassung entnommen werden kann. Durch Einführen eines Schlüssels 55 in das Zylinderschloss 54 und dessen Drehung werden die beiden Platten 112 gegen den Widerstand der Druckfeder 111 in Richtung der durch Pfeile J angegebenen Richtung wieder zusammengedrückt, wodurch sich deren Verrastung mit den Rastnasen 108 wieder löst. Nun kann die durch die vorherige Bewegung des Halterahmens 105 komprimierte Druckfeder 110 den Halterahmen 105 wieder nach unten bewegen (entlang der Richtung der gestrichelten Pfeile K), wodurch der Rasthaken 104 wieder in Eingriff mit dem Rastnasenkranz 102 gerät. Die Situation vor Beginn dieser Bewegung ist in Fig. 9e dargestellt. Nachdem der Rasthaken 104 wieder in Eingriff mit dem Rastnasenkranz 102 gelangt ist, befindet sich der Rastmechanismus 100 wieder in entsperrtem Zustand (vgl. Fig. 9b).

Gemäß obiger Beschreibung kann der Rastmechanismus durch Drehen des Lichtemissionskörpers 40 im Gegenuhrzeigersinn (entlang des Pfeils D) in den versperrten Zustand gebracht werden (falls ein genügend großes Drehmoment vorliegt, wie es beispielsweise nach dem vollständigen Einschrauben der Lampe 20 in eine Leuchtenfassung gegeben ist). Alternativ kann der Rastmechanismus 100 auch dadurch in den versperrten Zustand gebracht werden, dass Druck auf das Zylinderschloss 54 nach radial innen ausgeübt wird. Auch in diesem Fall ergibt sich die gleiche Bewegungsfolge des Halterahmens 105 in der Aussparung 106. Es ist klar, dass der Rastmechanismus 100 auch in einer um 90° gedrehten Anordnung in dem Lichtemissionskörper 40 untergebracht werden kann, so dass er nicht von der Seite, also in horizontaler Richtung, sondern von oben, in vertikaler Richtung, über eine Umlenkung betätigt werden kann.

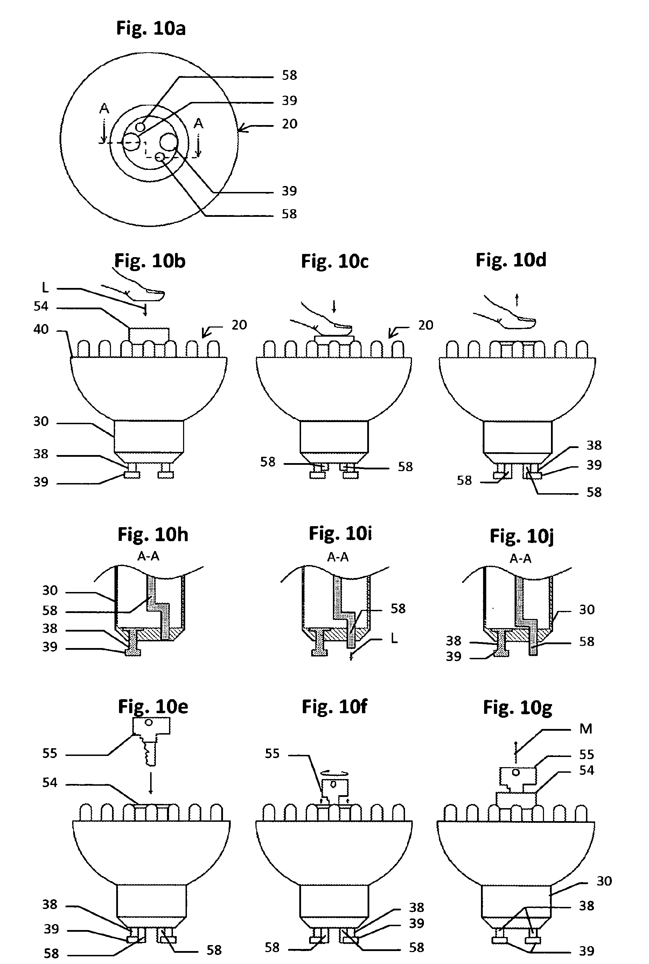

In den **Fig. 10a -10j** ist eine achte Ausführungsform der erfindungsgemäßen Lampe 20 dargestellt. Fig. 10a zeigt eine Ansicht dieser Lampe 20 von unten. Die Fig. 10b - 10g sind Seitenansichten der in Fig. 10a gezeigten Lampe 20 in verschiedenen Stadien des Versperrens und Entsperrens mittels eines Sperrstifts 58, während die Fig. 10h - 10j Querschnittsansichten durch die Fig. 10a längs A-A in den drei Stadien entsprechend Fig. 10b - 10d sind.

Gemäß der achten Ausführungsform ist die Lampe 20 - hier als LED-Lampe dargestellt - mittels eines hier beispielhaft verwendeten Bajonettverschlusses vom Typ GU10 in die entsprechende (nicht gezeigte) Leuchtenfassung einsetzbar. Hierzu weist die Lampe 20 zwei Bajonettanschlussstifte 38 auf, von denen in Fig. 10a jeweils nur deren verdicktes Ende 39 gezeigt ist. Ein solcher Bajonettverschluss umfasst in der Regel mehrere (hier zwei) Bajonettöffnungen, welche jeweils aus einem Einführungsabschnitt mit einer größeren lichten Weite sowie einem Verriegelungsabschnitt mit einer kleineren lichten Weite gebildet sind. Meist sind Einführungsabschnitt und Verriegelungsabschnitt als Kreise oder Kreisabschnitte ausgestaltet. Die Fig. 10b - 10j zeigen die Lampe 20 in der verriegelten Stellung des Bajonettverschlusses, in der sich die Bajonettanschlussstifte 38 jeweils in einem Verriegelungsabschnitt befinden.

Die achte Ausführungsform zeichnet sich dadurch aus, dass die Absperrvorrichtung zwei im Wesentlichen parallel zu den Bajonettanschlussstiften 38 angeordnete, parallel zu diesen verschiebliche, Sperrstifte 58 aufweist. Durch Druck auf ein Zylinderschloss 54 wird dieses entlang der Längsachse (vgl. Pfeil L in den Fig. 10b und 10c) der Lampe 20 in Richtung vom Lichtemissionskörper 40 auf den Lampensockel 30 zu bewegt. Das Zylinderschloss 54 ist mit den Sperrstiften 58 verbunden, weshalb diese ebenfalls in Richtung des Pfeils L bewegt werden. Wenn das Zylinderschloss 54 ganz eingedrückt ist, befinden sich die in den Figuren unten angeordneten Enden der Sperrstifte 58 in gleicher Höhe mit den verdickten Enden 39 der Bajonettanschlussstifte 38 (vgl. Fig. 10d und 10j), und das Zylinderschloss 54 rastet in dieser Stellung automatisch ein. Die technische Ausgestaltung einer solchen automatischen Einrastung ist an sich bekannt und bedarf somit keiner weiteren Erörterung. Die Anordnung der Sperrstifte 58 relativ zu den Bajonettanschlussstiften 38 muss dabei - wie aus der vorstehenden Beschreibung ersichtlich - so getroffen sein, dass die Sperrstifte 58 in der Verriegelungsstellung der Bajonettanschlussstifte 38 durch Drücken des Zylinderschlosses 54 und damit der Sperrstifte 58 in die Einführungsabschnitte bewegt werden und somit in Eingriff mit diesen gebracht werden können. In der in Fig. 10d gezeigten Stellung ist somit die Lampe 20 in der Leuchtenfassung verriegelt, befindet sich somit in einem Sperrzustand.

Aus dem Sperrzustand lässt sich die Lampe 20 nur dadurch befreien, dass das Zylinderschloss 54 mittels eines Schlüssels 55 gemäß Fig. 10e - 10g geöffnet und somit der Einrastzustand aufgehoben wird, wodurch sich das Zylinderschloss 54 zusammen mit den Sperrstiften 58 längs Pfeil M wieder von dem Lampensockel 30 wegbewegen kann. Danach kann die Lampe 20 in herkömmlicher Weise durch Drehen aus der Bajonettöffnung entfernt werden.

Obwohl die vorstehend beschriebene achte Ausführungsform jeweils zwei Bajonettanschlussstifte 38 und Sperrstifte 58 aufweist, können selbstverständlich auch jeweils mehr oder weniger als zwei, insbesondere jeweils drei, vorhanden sein.

Bei allen vorgenannten Ausführungsformen ist es somit möglich, die Absperrvorrichtung in einen Sperrzustand zu bringen, aus dem sie ohne entsprechende Autorisierung - sei es auf mechanische Weise durch einen Schlüssel oder sei es auf elektronische Weise durch Eingabe eines entsprechenden Codes oder Funksignals - nicht wieder in den entsperrten Zustand gebracht werden kann. Somit ist eine optimale Diebstahlsicherung bei den erfindungsgemäßen Lampen und Leuchten möglich.

Es versteht sich von selbst, dass die unter Bezug auf bestimmte Lampensockel beschriebene Erfindung auch bei vielen anderen Sockelarten einsetzbar ist. Außerdem kann statt eines Leer- oder Freilaufs eine beliebige mechanische Sperre eingesetzt werden.

Es ist festzuhalten, dass die unter Bezug auf einzelne Ausführungsformen beschriebenen Merkmale der Erfindung, wie beispielsweise Zahlen-, Zylinder- oder elektronische Schlösser, Codierungs- und Übertragungssysteme etc., auch bei anderen Ausführungsformen vorhanden sein können, außer wenn es anders angegeben ist oder sich aus technischen Gründen von selbst verbietet.

### Bezugszeichenliste:

- 20: Lampe
- 30: Lampensockel
- 31: Anschlussstift
- 32: Endkappe
- 33: Aussparung
- 34: Stromabnehmerzylinder
- 35: elektrisch leitender Ring
- 36: Zwischenstück
- 37: Schleifkontakt
- 38: Bajonettanschlussstift
- 39: verdicktes Ende
- 40: Lichtemissionskörper
- 50: Absperrvorrichtung
- 52: individualisiertes Schloss
- 54: Zylinderschloss
- 55: Schlüssel
- 56: Zahlenschloss
- 57: Zahleneinstellrad
- 58: Sperrstift
- 60: elektromagnetisches Schloss
- 61: Spule
- 62: Empfangseinheit
- 63: Axialfeder
- 64: RFID
- 65: Bolzen
- 66: Elektronik
- 68: Empfangseinheit
- 69: Sendeeinheit
- 70: Anschlussvorrichtung
- 71: Anschlusskanal
- 72: Steuereinheit
- 74: axialer Zugangskanal
- 76: Codeeingabefeld mit Tipptasten
- 80: Riegel
- 82: Betätigungsvorsprung
- 90: Verstellmechanismus
- 91: Eingriffsöffnung
- 92: Anzeigeanordnung
- 93: Mikroschalter
- 94: Schiebeschalter
- 96: Einstellwerkzeug
- 100: Rastmechanismus
- 102: Rastnasenkranz
- 103: Rastnase
- 104: Rasthaken
- 105: Halterahmen
- 106: Aussparung
- 108: Rastvorsprung
- 110: Druckfeder
- 111: Druckfeder
- 112: Platte
- 130: Warnmechanismus
- A - O: Bewegungspfeile

## Patentansprüche

1. Elektrische Lampe (20), insbesondere eine LED- oder OLED-Lampe, zum Einsetzen in eine Leuchtenfassung, aufweisend
- einen Lampensockel (30),
- einen mit dem Lampensockel (30) verbundenen Lichtemissionskörper (40), und
- eine Absperrvorrichtung (50), die im Sperrzustand das Entnehmen der Lampe (20) aus der Leuchtenfassung verhindert und im entsperrten Zustand das Entnehmen der Lampe (20) aus der Leuchtenfassung ermöglicht, **dadurch gekennzeichnet, dass** die Absperrvorrichtung (50) ein individualisiertes Schloss (52) aufweist, durch das sie entsperrbar ist.

2. Lampe (20) nach Anspruch 1,
**dadurch gekennzeichnet, dass** sich im Sperrzustand der Absperrvorrichtung (50) der Lichtemissionskörper (40) bezüglich des Lampensockels (30) in einer Leerlaufstellung, insbesondere einer Leerlaufstellung in Bezug auf eine gegenseitige Verdrehbarkeit, befindet, wobei vorzugsweise das individualisierte Schloss (52) einen beweglichen Riegel (80) aufweist, der im entsperrten Zustand eine starre Verbindung zwischen dem Lampensockel (30) und dem Lichtemissionskörper (40) herstellt, und vorzugsweise das individualisierte Schloss (52) ein Bartschloss, ein Zylinderschloss (54) oder ein Zahlenschloss (56) ist.

3. Lampe (20) nach Anspruch 1 oder 2,
**dadurch gekennzeichnet, dass** das individualisierte Schloss (52) einen Riegel aufweist, der elektromagnetisch bzw. elektromechanisch bewegbar ist.

4. Lampe (20) nach Anspruch 3,
**dadurch gekennzeichnet, dass** das Schloss (60) eine, vorzugsweise als RFID-Chip (64) ausgebildete, Empfangseinheit (62) für ein codiertes Funksignal oder für ein über ein anschließbares Kabel oder sonstiges Übertragungsmittel übertragenes Signal aufweist, mittels dem es entsperrbar ist.

5. Lampe (20) nach einem der Ansprüche 3 oder 4,
**dadurch gekennzeichnet, dass** zur Stromversorgung des Schlosses (60) eine Empfangseinheit (68) für elektromagnetisch induzierte Spannung vorgesehen ist.

6. Lampe (20) nach Anspruch 3,
**dadurch gekennzeichnet, dass** das Schloss (60) eine Anschlussvorrichtung (70) zum Anschluss einer Steuereinheit (72) zum Versperren und Entsperren des Schlosses (60) aufweist oder dass mit dem Schloss (60) ein codierter Schalter (76) zum Versperren und Entsperren des Schlosses (60) verbunden ist.

7. Lampe (20) nach einem der vorhergehenden Ansprüche,
**dadurch gekennzeichnet, dass** das individualisierte Schloss (52) einen elektrischen Motor oder Magnetschalter zum Betätigen des Schlosses (52) aufweist.

8. Lampe (20) nach einem der vorhergehenden Ansprüche,
**dadurch gekennzeichnet, dass** das individualisierte Schloss (52) eine Codierung aufweist, die nur im entsperrten Zustand änderbar ist.

9. Lampe (20) nach Anspruch 1, 2 oder 8,
**dadurch gekennzeichnet, dass** das individualisierte Schloss (52) einen Verstellmechanismus (90) mit einer Eingriffsöffnung (91) aufweist, deren Form veränderbar, vorzugsweise an zwei Parametern veränderbar, ist, wobei jeder Formänderungsparameter durch eine am Lampensockel (30) angebrachte und für einen Benutzer sichtbare Anzeigeanordnung (92) codiert ist.

10. Lampe (20) nach einem der vorhergehenden Ansprüche,
**dadurch gekennzeichnet, dass** die Absperrvorrichtung (50) einen Rastmechanismus (100) aufweist, der während des Ausdrehens des Lampensockels (30) aus der Leuchtenfassung bei Ausübung eines Drehmoments, welches eine vorgegebene Schwelle überschreitet, automatisch aus dem entsperrten Zustand in den Sperrzustand übergeht und im Sperrzustand verbleibt, wobei vorzugsweise der Rastmechanismus (100) gebildet ist aus:
- einem drehfest mit dem Lampensockel (30) verbundenen Rastnasenkranz (102),
- einem drehfest mit dem Lichtemissionskörper (40) verbundenen, in entsperrtem Zustand in den Rastnasenkranz (102) eingreifenden, Rasthaken (104),
- einer Druckfeder (110), welche den Rasthaken (104) in den Eingriff mit dem Rastnasenkranz (102) beaufschlagt, und
- einer Rastvorrichtung (114), welche einen Übergang des Rasthakens (104) von einer Stellung in Eingriff mit dem Rastnasenkranz (102) in eine Stellung außer Eingriff mit dem Rastnasenkranz (102) zulässt sowie den in Eingriff mit dem Rastnasenkranz (102) befindlichen Rasthaken (104) in dieser Stellung hält.

11. Lampe (20) nach einem der Ansprüche 1, 2, 8 oder 9,
**dadurch gekennzeichnet, dass** die Absperrvorrichtung (50) mechanische Sperrelemente (58) oder eine Vorrichtung zur Änderung der Form des Lampensockels (30) aufweist, womit ein verriegelndes Zusammenwirken mit der Leuchtenfassung erzielbar ist.

12. Lampe (20) nach einem der Ansprüche 1, 2, 8, 9 oder 11, wobei der Lampensockel (30) mindestens einen Bajonettanschlussstift (38) zum Einsetzen in eine entsprechende in der Leuchtenfassung vorgesehene Bajonettöffnung aufweist, welche einen Einführungsabschnitt mit einer ersten lichten Weite sowie einen Verriegelungsabschnitt mit einer zweiten lichten Weite, die kleiner als die erste lichte Weite ist, umfasst,
**dadurch gekennzeichnet, dass** die Absperrvorrichtung (50) mindestens einen Sperrstift (58) aufweist, der in der Verriegelungsstellung des Bajonettanschlussstifts (38), in welcher sich der Bajonettanschlussstift (38) in dem Verriegelungsabschnitt befindet, in den Einführungsabschnitt bringbar und dort arretierbar ist.

13. Lampe (20) nach einem der vorhergehenden Ansprüche,
**dadurch gekennzeichnet, dass** sie einen Warnmechanismus (130) aufweist, der ein Warnsignal abgibt, falls der in die Leuchtenfassung eingesetzte Lampensockel (30) unbefugt entfernt werden soll, wobei vorzugsweise das Warnsignal akustische und/oder visuelle Signale, insbesondere eine Variation der Beleuchtungsintensität des Lichtemissionskörpers (40),
umfasst.

14. Lampe (20) nach Anspruch 13,
**dadurch gekennzeichnet, dass** das visuelle Signal ein Aufleuchten eines Signalleuchtmittels umfasst und/oder dass der Warnmechanismus (130) einen elektrischen Kondensator enthält, der sich als Warnsignal bei unbefugter Berührung entlädt.

15. Leuchte mit einer Leuchtenfassung, insbesondere LED- oder OLED-euchte, aufweisend eine elektrische Lampe (20) gemäß einem der vorhergehenden Ansprüche.

## Claims

1. An electrical lamp (20), especially a LED or OLED lamp, for inserting into a lamp holder, comprising
- a lamp socket (30),
- a light emitting body (40) connected to the lamp socket (30), and
- a locking device (50) which in the locked condition prevents withdrawal of the lamp (30) from the lamp holder and in the unlocked condition allows withdrawal of the lamp (20) from the lamp holder,
**characterized in that** the locking device (50) has a personalized lock (52) by means of which it is unlockable.

2. The lamp (20) according to claim 1, **characterized in that** in the locked condition of the locking device (50) the light emitting body (40) is in an idle position in relation to the lamp socket (30), especially an idle position in respect to mutual twistability, wherein preferably the personalized lock (52) has a displaceable bolt (80) which in the unlocked condition causes rigid connection between the lamp socket (30) and the light emitting body (40), and especially the personalized lock (52) is a warded lock, a cylinder lock (54) or a combination lock (56).

3. The lamp (20) according to claim 1 or 2,
**characterized in that** a personalized lock (52) has a bolt which is displaceable electromagnetically or electromechanically, respectively.

4. The lamp (20) according to claim 3,
**characterized in that** the lock (60) has a receiving unit (62) preferably formed as a RFID chip (64) for an encoded radio signal or for a signal which is transmitted via a connectable cable or another transmitting device by means of which it is unlockable.

5. The lamp (20) according to claim 3 or 4,
**characterized in that** a receiving unit (68) for electromagnetically induced voltage is provided as the power supply.

6. The lamp (20) according to claim 3,
**characterized in that** the lock (60) has a connecting unit (70) for connecting a control unit (72) for locking and unlocking the lock (60) or **in that** an encoded actuator (76) for locking and unlocking the lock (60) is connected to the lock (60).

7. The lamp (20) according to one of the preceding claims,
**characterized in that** the personalized lock (52) has an electrical motor or a magnetic actuator for actuating the lock (52).

8. The lamp (20) according to one of the preceding claims,
**characterized in that** the personalized lock (52) has a coding which solely is alterable in the unlocked condition.

9. The lamp (20) according to claim 1, 2 or 8,
**characterized in that** the personalized lock (52) has an adjustment mechanism (90) with an engagement aperture (91), the form of which is alterable, preferably alterable in two parameters, wherein each deformation parameter is encoded by a display arrangement (92) attached at the lamp socket (30) and which is visible by a user.

10. The lamp (20) according to one of the preceding claims,
**characterized in that** the locking device (50) has a ratchet control (100) which during unscrewing the lamp socket (30) from the lamp holder upon exerting a twisting momentum which exceeds a preset threshold, will automatically be transferred from the unlocked condition into a locked condition and will remain in the locked condition, wherein the ratchet control (100) is formed by.
- a rim of snap-in noses (102) preferably fixedly connected to the lamp socket (30),
- a snap-in hook (104) which is fixedly connected to the light emitting body (40) and which in the unlocked condition engages into the rim of snap-in noses (102),
- a pressure spring (110) biasing the snap-in hook (104) in the engagement with the rim of snap-in noses (102), and
- a snap-in locking device (114) allowing transition of the snap-in hook (104) from one position engaging the rim of snap-in noses (102) into a position not engaging the rim of snap-in noses (102) as well as holding the snap-in hook (104) which engages the rim of snap-in noses (102) **in that** position.

11. The lamp (20) according to one of the claims 1, 2, 8 or 9,
**characterized in that** the locking device (50) has mechanical locking elements (58) or a device for the modification of the shape of the lamp socket (30) whereby locking cooperation with the lamp holder can be achieved.

12. The lamp (20) according to one of the claims 1, 2, 8, 9 or 11, wherein the lamp socket (30) has at least one connecting pin of the bayonet type (38) for inserting into a respective bayonet aperture provided in the lamp holder comprising an insertion section having a first clearance as well as a locking section having a second clearance which is smaller than the first clearance,
**characterized in that** the locking device (50) has at least one locking pin (58) which in the locking position of the bayonet-type connecting pin (38) in which the bayonet-type connecting pin is located in the locking section, is insertable and is lockable therein.

13. The lamp (20) according to one of the preceding claims
**characterized in that** it comprises a warning mechanism (130) emitting a warning signal in the case that the lamp socket (30) inserted into the lamp holder is to be unauthorizedly, wherein the warning signal preferably comprises acoustic and/or visual signals, especially variation of illumination intensity of the light emitting body (40).

14. The lamp (20) according to claim 13,
**characterized in that** the visual signal comprises the flashing of a light-signalling device and/or **in that** the warning mechanism (130) contains an electrical capacitor which upon unauthorized contact will discharge as a warning signal.

15. A Luminaire having a luminaire holder, especially a LED or OLED luminaire, comprising an electrical lamp (20) according to one of the preceding claims.

## Revendications

1. Lampe électrique (20), en particulier lampe à LED ou OLED, destinée à être mise en place dans une douille de luminaire, comprenant
- un culot de lampe (30),
- un corps émetteur de lumière (40) relié avec le culot de lampe (30), et
- un dispositif de verrouillage (50) qui, dans l'état verrouillé, empêche l'enlèvement de la lampe (20) hors de la douille de luminaire et, dans l'état déverrouillé, permet l'enlèvement de la lampe (20) hors de la douille de luminaire,
**caractérisée en ce que** le dispositif de verrouillage (50) comprend une serrure individualisée (52) au moyen de laquelle il peut être déverrouillé.

2. Lampe (20) selon la revendication 1,
**caractérisée en ce que**, dans l'état verrouillé du dispositif de verrouillage (50), le corps d'émission de lumière (40) se trouve, par rapport au culot de lampe (30) dans une position dite de "roue libre", en particulier une position de "roue libre" par référence à une capacité de rotation réciproque, et la serrure individualisée (52) comprend de préférence un verrou déplaçable (80) qui, dans l'état déverrouillé, établit une liaison rigide entre le culot de lampe (30) et le corps d'émission de lumière (40), et la serrure individualisée (52) est de préférence une serrure à [], une serrure à cylindre (54) ou une serrure à combinaison (54).

3. Lampe (20) selon la revendication 1 ou 2,
**caractérisée en ce que** la serrure individualisée (52) comprend un verrou déplaçable par voie électromagnétique ou électromécanique.

4. Lampe (20) selon la revendication 3,
**caractérisée en ce que** la serrure (60) comprend une unité réceptrice (62), réalisée de préférence comme une puce RFID (64) pour un signal radio codé ou pour un signal transmis via un câble à raccorder ou via un autre moyen de transmission, au moyen duquel elle peut être déverrouillée.

5. Lampe (20) selon l'une des revendications 3 ou 4,
**caractérisée en ce que** pour l'alimentation électrique de la serrure (60) il est prévu une unité réceptrice (68) pour une tension induite par voie électromagnétique.

6. Lampe (20) selon la revendication 3,
**caractérisée en ce que** la serrure (60) comprend un dispositif de connexion (70) pour la connexion d'une unité de commande (72) pour verrouiller et déverrouiller la serrure (60), ou **en ce qu'**un commutateur codé (76) destiné à verrouiller et à déverrouiller la serrure (60) est relié à la serrure (60).

7. Lampe (20) selon l'une des revendications précédentes,
**caractérisée en ce que** la serrure individualisée (52) comprend un moteur électrique ou un commutateur magnétique pour l'actionnement de la serrure (52).

8. Lampe (20) selon l'une des revendications précédentes,
**caractérisée en ce que** la serrure individualisée (52) comprend un codage qui ne peut être modifié que dans l'état déverrouillé.

9. Lampe (20) selon la revendication 1, 2 ou 8,
**caractérisée en ce que** la serrure individualisée (52) comprend un dispositif de réglage (90) avec une ouverture d'intervention (91), dont la forme est modifiable, de préférence modifiable au niveau de deux paramètres, et chaque paramètre de modification de forme est codé par un agencement indicateur (92) appliqué sur le culot de lampe (30) et visible pour un utilisateur.

10. Lampe (20) selon l'une des revendications précédentes,
**caractérisée en ce que** le dispositif de verrouillage (50) comprend un mécanisme à enclenchement (100) qui, pendant la rotation du culot de lampe (30) hors de la douille de luminaire, en cas d'exercice d'un couple de rotation qui dépasse un seuil prédéterminé, passe automatiquement de l'état déverrouillé vers l'état verrouillé et demeure dans l'état verrouillé, dans laquelle le mécanisme à enclenchement (100) est de préférence réalisé à partir de :
- une couronne d'ergots d'enclenchement (102) reliée au culot de lampe (30),
- un crochet d'enclenchement (104), relié solidairement au corps émetteur de lumière (40) et s'engageant dans la couronne d'ergots d'enclenchement (102) dans l'état déverrouillé,
- un ressort de compression (110) qui sollicite le crochet d'enclenchement (104) en engagement avec la couronne d'ergots d'enclenchement (102), et
- un dispositif d'enclenchement (114) qui permet un passage du crochet d'enclenchement (104) depuis une position en engagement avec la couronne d'ergots d'enclenchement (102) jusque dans une position où il est hors d'engagement avec la couronne d'ergots d'enclenchement (102), et qui maintient le crochet d'enclenchement (104) qui se trouve en engagement avec la couronne d'ergots d'enclenchement (102) dans cette position.

11. Lampe (20) selon l'une des revendications 1, 2, 8 ou 9,
**caractérisée en ce que** le dispositif de verrouillage (50) comprend des éléments de verrouillage mécanique (58), ou un dispositif pour modifier la forme du culot de lampe (30), grâce à quoi il est possible d'atteindre une coopération à effet de verrouillage avec la douille de lampe.

12. Lampe (20) selon l'une des revendications 1, 2, 3, 9 ou 11, dans laquelle le culot de lampe (50) comprend une tige de raccord à baïonnette (38) destinée à être mis en place dans une ouverture à baïonnette correspondante prévue dans la douille de luminaire, ouverture qui comprend un tronçon d'introduction avec une première largeur libre, ainsi qu'un tronçon de verrouillage avec une seconde largeur libre qui est plus petite que la première largeur libre, **caractérisée en ce que** le dispositif de verrouillage (51) comprend au moins une tige de verrouillage (58) qui, dans la position de verrouillage de la tige de raccord à baïonnette (38), dans laquelle la tige de raccord à baïonnette (38) se trouve dans le tronçon de verrouillage, peut être amenée dans le tronçon d'introduction et y être arrêtée.

13. Lampe (20) selon l'une des revendications précédentes,
**caractérisée en ce qu'**elle comprend un mécanisme d'avertissement (130) qui délivre un signal d'avertissement dans le cas où le culot de lampe (30) mis en place dans la douille de luminaire venait à être enlevé de manière non autorisée, et le signal d'avertissement comprend de préférence des signaux acoustiques et/ou visuels, en particulier une variation de l'intensité d'éclairage du corps émetteur de lumière (40).

14. Lampe (20) selon la revendication 13,
**caractérisée en ce que** le signal visuel inclut un allumage d'un moyen d'éclairage de signalisation, et/ou **en ce que** le mécanisme d'avertissement (130) contient un condensateur électrique qui se décharge à titre de signal d'avertissement lors d'un contact non autorisé.

15. Luminaire comprenant une douille de lampe, en particulier une lampe à LED ou à OLED, comprenant une lampe électrique (20) selon l'une des revendications précédentes.
